# EUROPEAN PATENT APPLICATION

(11) **EP 4 446 964 A1**
(43) Date of publication of application: **16.10.2024**
(21) Application number: 24169755.6
(22) Date of filing: 11.04.2024
(51) Int. Cl.: G06Q 10/0833, G06Q 10/30, G06Q 30/016, G06Q 30/0208, G06Q 30/0207

(54) **INFORMATION PROCESSING SYSTEM AND INFORMATION PROCESSING METHOD**

(30) Priority: 14.04.2023 JP 2023066527
(71) Applicant: ASICS Corporation, Kobe-shi, Hyogo 650-8555 (JP)
(72) Inventor: Kamiya, Ryo, Hyogo, 6508555 (JP)
(74) Representative: Marks & Clerk LLP

(57) **Abstract**

An information processing system (10) includes: a possession registration management unit (24) that records possession registration information in which user identification information for identifying a user and product identification information for identifying a product obtained by the user are related to each other; a usage history management unit (26) that records usage history information regarding use of the product, acquired from a terminal used by the user; a collection management unit (28) that acquires collection information indicating that the product has been retrieved from the user; and a benefit management unit (32) that generates benefit information indicating a benefit to be granted to the user, based on possession registration information and usage history information of the product on the condition that the collection information has been acquired.

## Description

### BACKGROUND

### Technical field

The present disclosure relates to an information processing system and an information processing method.

### Background Information

In recent years, efforts have been made to promote the reuse and recycling of used products in order to achieve the Sustainable Development Goals (SDGs). For example, a technology has been proposed to promote the collection (or retrieval) of products by granting benefits when collecting used products, such as clothes (see Patent Literature 1, for example).

### Related-art Literature

### Patent Literature

Patent Literature 1: Japanese Unexamined Patent Application Publication No. 2022-184614

### SUMMARY

The related art described above can only reach out to users who know the collection service. It is preferable to enable promotion of product collection from a large number of users who use the products.

The present disclosure has been made in view of such a situation, and a general purpose thereof is to provide a technology for promoting the collection of used products.

An information processing system according to one embodiment of the present disclosure includes: a possession registration management unit that records possession registration information in which user identification information for identifying a user and product identification information for identifying a product obtained by the user are related to each other; a usage history management unit that records usage history information regarding use of the product, acquired from a terminal used by the user; a collection management unit that acquires collection information indicating that the product has been retrieved from the user; and a benefit management unit that generates benefit information indicating a benefit to be granted to the user, based on possession registration information and usage history information of the product on the condition that the collection information has been acquired.

Another embodiment of the present disclosure relates to an information processing method. This method is performed by an information processing system and includes: recording possession registration information in which user identification information for identifying a user and product identification information for identifying a product obtained by the user are related to each other; recording usage history information regarding use of the product, acquired from a terminal used by the user; acquiring collection information indicating that the product has been retrieved from the user; and generating benefit information indicating a benefit to be granted to the user, based on possession registration information and usage history information of the product on the condition that the collection information has been acquired.

### BRIEF DESCRIPTION OF THE DRAWINGS

Embodiments will now be described, by way of example only, with reference to the accompanying drawings which are meant to be exemplary, not limiting, and wherein like elements are numbered alike in several figures, in which:
FIG. 1 schematically illustrates an example of a method for promoting recycling of a product;
FIG. 2 is a block diagram that schematically shows a functional configuration of an information processing system;
FIG. 3 schematically illustrates an example of a box for storing a product;
FIG. 4 schematically illustrates an example of a display screen of a user terminal; and
FIG. 5 is a flowchart that shows an example of operation of the information processing system.

### DETAILED DESCRIPTION

The invention will now be described by reference to the preferred embodiments. This does not intend to limit the scope of the present invention, but to exemplify the invention.

An overview of the present disclosure will be described. The present disclosure relates to an information processing system for providing a mechanism to promote long-term use and recycling of products. Examples of the products include apparel products worn by users, such as clothes and shoes, but are not limited thereto. In recent years, efforts have been made to continuously provide products with less environmental impact by manufacturing products from recyclable or easily recyclable materials and by using recycled materials generated from collected products to manufacture new products. In order to promote such efforts, it is necessary to make users aware that the products are recyclable and to certainly collect (or retrieve) the products from the users after they have used the products with care.

In the present disclosure, a user and a product are related to each other and registered in an information processing system, and usage history information regarding use of the product by the user is gathered in the information processing system. Based on the gathered usage history information, the retrieval of the product from the user is proposed, thereby improving the collection rate of the product. For example, the system achieves promotion of recycling through the retrieval of a product that has been sufficiently used by the user and also achieves promotion of reuse through the retrieval of a product that is used infrequently by the user. Also, when a product is retrieved, a benefit may be granted based on the usage history information. For example, a greater benefit may be granted to a user who uses a product carefully, thereby promoting long-term use of a product. Furthermore, to a user who cooperates in the collection of products, a benefit may be granted on the condition that the user purchases a specific recyclable product, thereby promoting a virtuous cycle of recycling.

In the following, the present disclosure will be described based on a preferred embodiment with reference to each drawing. In the embodiment and modifications, like reference characters denote like or corresponding constituting elements, and the repetitive description will be omitted as appropriate.

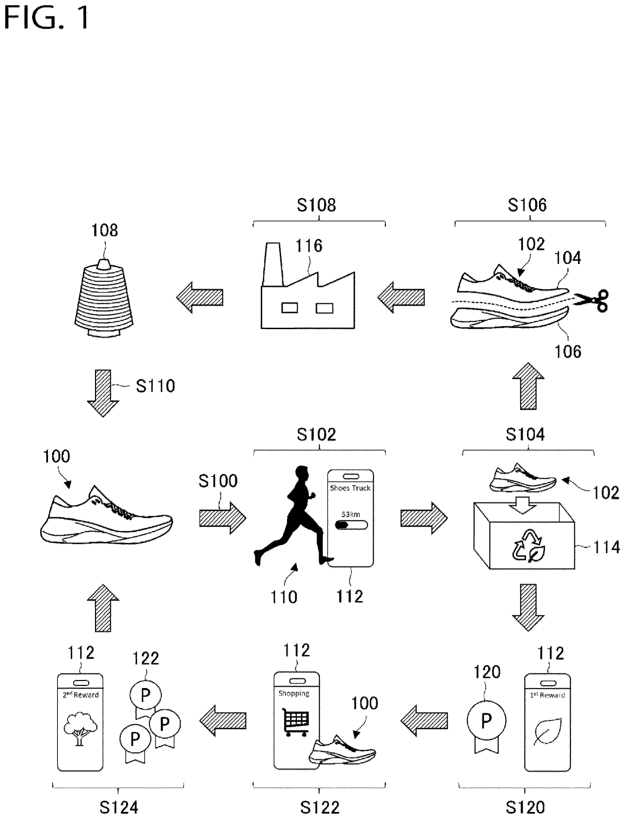

FIG. 1 schematically illustrates an example of a method for promoting recycling of a product 100. FIG. 1 shows a case where the product 100 is a shoe. The product 100 is produced using a recyclable material. A user 110 acquires (e.g., purchases) the product 100 (S100) and uses the product 100 (S102). The user 110 registers the product 100 in a user terminal 112, such as a smartphone that the user 110 uses. The user terminal 112 acquires the used amount (e.g., running distance) of the product 100 and displays the amount on the screen. After the product 100 is sufficiently used by the user 110, the used product 102 is retrieved for recycling (S104). The used product 102 may be stored in a box 114, for example, and is delivered to a collection site for recycling. The box 114 may be a collection box installed at a store or the like where recycling is accepted.

The retrieved product 102 is separated into, for example, a first component (such as an upper) 104 and a second component (such as a sole) 106 by material (S106), and each component is reprocessed at a reprocessing base 116 (S108). For example, the first component (such as an upper) 104 is reprocessed into a recycled material (raw thread) 108, which is used to produce a new product 100 (S110). By repeatedly performing the steps S100-S110, the cycle of recycling of the product 100 is sustained. Instead of separating the used product 102 into multiple components in the step S106, the product 102 may be separated into multiple components before the retrieval in the step S104, and each component may be retrieved separately.

When the used product 102 is retrieved in the step S104, a first benefit 120 is granted to the user 110, and, for example, a notification of the grant of the first benefit 120 is provided to the user terminal 112 (S120). Also, when the user 110 purchases a new recyclable product 100 (S122), a second benefit 122 is granted to the user 110, and, for example, a notification of the grant of the second benefit 122 is provided to the user terminal 112 (S124). The first benefit 120 and the second benefit 122 can be used to purchase a product, used for charities such as tree planting or donations, or used as a ticket to participate in an event. By granting the first benefit 120 on the condition that the used product 102 has been retrieved, the retrieval of the used product 102 from the user 110 can be promoted. Also, by granting the second benefit 122 on the condition that the recyclable product 100 has been purchased, the purchase of the recyclable product 100 by the user 110 can be promoted. This can motivate the user 110 to sustain the cycle of recycling of the product 100, thereby promoting the sustainment of the cycle of recycling of the product 100.

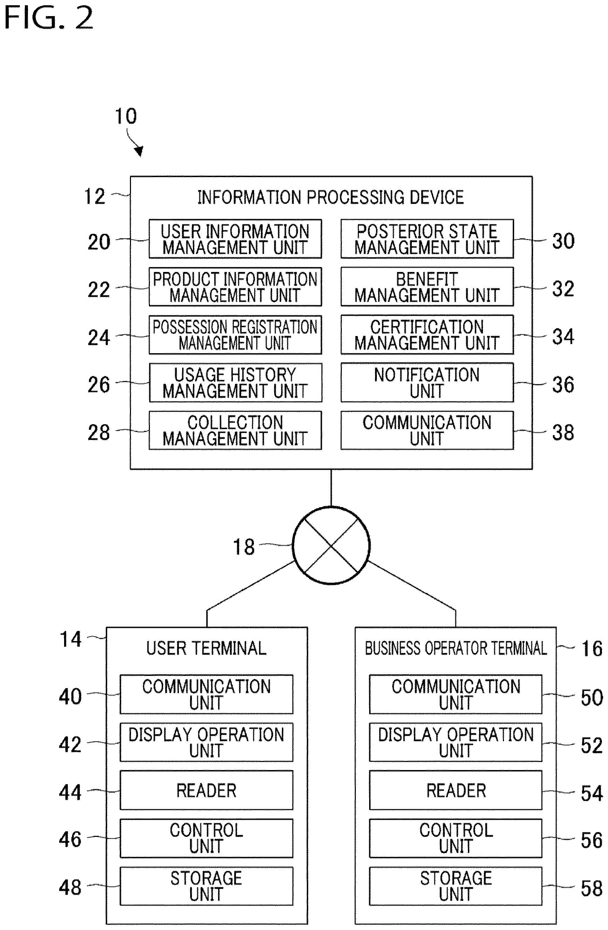

FIG. 2 is a block diagram that schematically shows a functional configuration of the information processing system 10. The information processing system 10 includes an information processing device 12, a user terminal 14, and a business operator terminal 16. The information processing device 12 is connected to the user terminal 14 and the business operator terminal 16 via a network 18.

The information processing device 12 performs information processing for providing a platform operated by a business operator responsible for providing, collecting, and recycling products. The information processing device 12 is constituted by a general-purpose server device or the like.

The user terminal 14 is a terminal used by a user who uses a product, and the user terminal 14 may be a personal computer, tablet terminal, smartphone, or the like owned by the user.

The business operator terminal 16 is a terminal used by an employee of a business operator responsible for providing, collecting, or recycling products and may be a personal computer, tablet terminal, smartphone, or the like. The business operator terminal 16 may be a store terminal installed at a store where products are sold or may be a terminal used by a logistics provider responsible for delivering or collecting products. The business operator terminal 16 may also be a collection device that accepts the collection of products, installed in a commercial facility or public facility.

Each block shown in a block diagram in this specification can be implemented by an element such as a processor or memory of a computer or by a mechanism in terms of hardware, and by a computer program or the like in terms of software. FIG. 2 illustrates functional blocks implemented by coordination of those components. It will be understood by those skilled in the art that these functional blocks may be implemented in a variety of forms by combinations of hardware and software.

The functions of multiple blocks shown in FIG. 2 may be implemented by a single computer or may be distributed to and implemented by multiple computers. When the functions of multiple blocks shown in FIG. 2 are distributed to and implemented by multiple computers, such multiple computers may transmit and receive data via a communication network, such as a local area network (LAN), a wide area network (WAN), and the Internet.

The information processing device 12 includes a user information management unit 20, a product information management unit 22, a possession registration management unit 24, a usage history management unit 26, a collection management unit 28, a posterior state management unit 30, a benefit management unit 32, a certification management unit 34, a notification unit 36, and a communication unit 38.

The user information management unit 20 stores and manages information related to a user who uses a product, which is also referred to as user information. The user information management unit 20 generates the user information based on information acquired from the user terminal 14, for example. The user information includes information such as the name, date of birth, address, physical information, and hobbies and preferences of the user, in association with user identification information for identifying the user, such as a user ID. The physical information includes the user's height and weight and information on the size and shape of a body part (e.g., a foot) where the product is worn, such as foot shape information including the foot length and ball girth.

The product information management unit 22 stores and manages information related to a product provided to the user, which is also referred to as product information. The product information includes information such as the product name, product type, product image, and product description, in association with product identification information for identifying the product, such as a product ID. The product identification information may include a product number assigned to each kind of product, a product lot number assigned to each product lot, and an individual product number assigned to each individual product. The product identification information may also include multiple component numbers assigned respectively to multiple components constituting the product. The product identification information may also include a component lot number assigned to each lot of components constituting the product and may also include an individual component number assigned to each individual component constituting the product. For example, when the products are shoes, each of the left shoe and the right shoe may be assigned separate product identification information, or each of the upper component and the sole component of the shoes may be assigned separate product identification information. Also, using a bar code, two-dimensional code, wireless tag, or the like, the product identification information may be assigned to the product or a component constituting the product or to a box for storing the product. When the product is reused, the product identification information before the reuse may be used as it is, or product identification information different from that before the reuse may be assigned to the reused product.

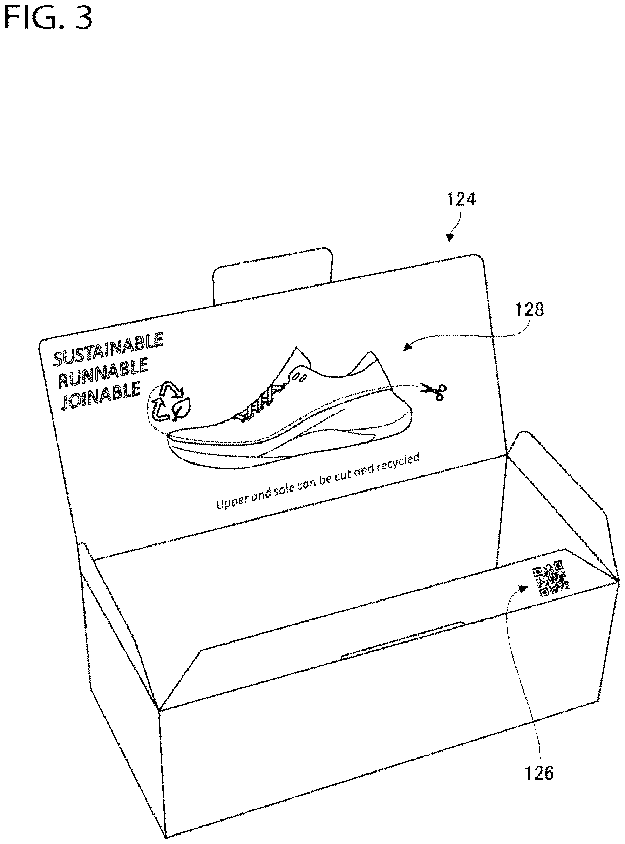

FIG. 3 schematically illustrates an example of a box 124 for storing a product. In the example of FIG. 3, the product is a shoe. The box 124 is provided with a two-dimensional code 126 as the product identification information. The box 124 is also provided with an illustration 128 indicating that the product is recyclable. In the example of FIG. 3, it is shown that the shoe can be recycled by separating the upper and the sole of the shoe. Providing the box 124 with the illustration 128 regarding the product recycling can effectively give the user a motivation for recycling.

The possession registration management unit 24 stores and manages possession registration information in which a user and a product acquired by the user are related to each other. The possession registration information includes the user identification information, the product identification information, and the registration date and time. The possession registration information is generated, for example, when a user who has acquired a product performs possession registration processing on the user terminal 14. The possession registration information may also be generated at the time of purchase of a product by a user or the time of delivery of a product. For example, when a user purchases a product at a store, the possession registration information may be generated based on the user identification information and the product identification information read by the business operator terminal 16 used in the store. When a user purchases a product at an online store, the possession registration information may be generated based on the user identification information and the product identification information read by the business operator terminal 16 used in a delivery base where the product is shipped to the user. When the product is reused, the possession registration information is rewritten, and the correspondence relationship between the user identification information and the product identification information is updated.

The usage history management unit 26 stores and manages usage history information regarding use of a product, acquired from the user terminal 14. The usage history information includes information indicating at least one of the date and time of use, the used amount, the degree of deterioration, or the appearance of the product. The used amount of the product includes, when the product is a shoe, the number of steps, walking distance, running distance, walking time, and running time, for example. When the product is a garment, the used amount of the product includes the wearing time, the number of times worn, and the number of times washed, for example. The degree of deterioration of the product includes information on the position and the amount of wear, tear, dirt, or the like that occurs on the product. The appearance of the product may be a captured image of the product. The usage history information may be generated by the user operating the user terminal 14 or may be generated by means of an application installed on the user terminal 14. For example, when the product is a shoe, the running distance and the running time of the user wearing the shoe may be generated by means of a running log application installed on the user terminal 14. The load during use of the product may be taken into consideration based on the physical information, such as the height and weight, of the user. For example, the used amount and the degree of deterioration of the product may be calculated (or corrected) based on the user's physical information. Furthermore, information measured by a sensor attached to the product may be acquired by the user terminal 14, and the usage history information may be generated based on the information acquired from the sensor. The usage history information is generated, for example, each time the user uses the product.

The collection management unit 28 stores and manages collection information regarding the retrieval of a product used by a user. The collection information includes, for example, the user identification information, the product identification information, and the retrieval date and time. The collection information is generated by the business operator terminal 16. When the user brings a product to a store, the collection information is generated when the user identification information and the product identification information is read by the business operator terminal 16 used in the store. When the user sends a product to a business operator, the collection information is generated when the user identification information and the product identification information is read by the business operator terminal 16 used in a collection site where the collection of products is accepted. The collection information may also be generated by the user terminal 14. For example, a product collection box may be installed at an event venue or the like, and the collection information may be generated when a two-dimensional code assigned to the collection box is read by the user terminal 14.

The posterior state management unit 30 stores and manages posterior state information regarding the state of a product after it has been retrieved from a user. The posterior state information includes recycling information or reuse information. The recycling information is posterior state information in the case where a recycled material is produced from a product retrieved from a user. The recycling information may include the progress of the process of producing a recycled material (the sorting process, crushing process, and process of conversion to the material) and information on a recycled product produced from the recycled material. The reuse information is posterior state information in the case where a product retrieved from a user is transferred as a used product to another user and reused by the another user. The reuse information may include the user identification information and the usage history information of the another user. The posterior state information may also include information indicating the amount of contribution to the environmental load reduction, such as the amount of CO₂ emissions that can be reduced by the recycling or reuse.

The benefit management unit 32 generates benefit information that indicates a benefit to be granted to a user who has cooperated in the collection of products. For example, the benefit management unit 32 generates the benefit information on the condition that the collection information, indicating that a product has been retrieved from a user, has been acquired. The benefit to be granted to a user is not particularly limited and may be, for example, points or a discount coupon that can be used to purchase a product, an invitation ticket that allows the user to purchase a special product or to participate in a special event, and the like. The benefit to be granted to a user may also be a coupon for free or discounted repair and inspection for a product. In this case, the retrieved product may be returned to the user after being repaired and inspected. The benefit to be granted to a user may also be points that can be used for charitable activities, such as tree planting and donations. The benefit to be granted to a user may also be a digital badge that indicates the amount of contribution to the environmental load reduction or may be a status of which the rank increases according to the amount of contribution.

The benefit management unit 32 generates the benefit information based on the possession registration information and the usage history information of a product retrieved from a user. The benefit management unit 32 may calculate the user's possession period of the product based on the possession registration information of the product and generate the benefit information based on the length of the possession period. For example, the benefit management unit 32 may generate the benefit information when the possession period of the product is a predetermined period or more, such as 2 years or more, and may not generate the benefit information when the possession period of the product is less than the predetermined period. The benefit management unit 32 may generate the benefit information that is, for example, more beneficial to the user as the possession period of the product is longer. This allows a greater benefit to be given to a user who has carefully used one product over a long period of time, thereby promoting long-term use of a product.

The benefit management unit 32 may calculate at least one of the number of uses, the total usage, or the degree of deterioration of the product based on the usage history information of the product and generate the benefit information based on the magnitude of the calculated result. The benefit management unit 32 may calculate the number of uses of the product by counting the number of pieces of usage history information associated with the product identification information of the retrieved product. Also, the benefit management unit 32 may calculate the total usage of the product by summing the used amounts included in the usage history information associated with the product identification information of the retrieved product. Also, the benefit management unit 32 may calculate the degree of deterioration of the product at the time of retrieval thereof, based on the information indicating the degree of deterioration or the appearance included in the usage history information associated with the product identification information of the retrieved product. The benefit management unit 32 may generate the benefit information if at least one of the number of uses, the total usage, or the degree of deterioration of the product is a predetermined level or higher and, if not, the benefit management unit 32 may not generate the benefit information. For example, the benefit management unit 32 may generate the benefit information when the number of uses of the product is a predetermined number or more, such as 50 times or more. Also, the benefit management unit 32 may generate the benefit information when, for example, the total usage of the product is a predetermined amount or more, such as when the running distance is 500 km or more. Also, the benefit management unit 32 may generate the benefit information when, for example, the degree of deterioration of the product is a predetermined level or higher, such as when the amount of wear of the sole is a predetermined value or more. The benefit management unit 32 may generate the benefit information based further on the user's physical information and may weight, based on the physical information, a predetermined value as a condition for granting the benefit. The benefit management unit 32 may also grant a benefit based on the input of the physical information by the user. The benefit management unit 32 may weight a predetermined value as a condition for granting the benefit based on the frequency of the user's input of the physical information, such as the frequency of periodic input for confirmation or input for updating associated with a change in the physical information. Also, the benefit management unit 32 may generate the benefit information that is more beneficial to the user as at least one of the number of uses, the total usage, or the degree of deterioration of the product is greater. Also, the benefit management unit 32 may vary, in steps, the content of the benefit to be granted, according to the magnitude of at least one of the number of uses, the total usage, or the degree of deterioration. This can promote the collection of products that have been used up and also can promote the replacement of products by heavy users.

When a product is reused by multiple users, the benefit management unit 32 may calculate the possession period, the number of uses, the total usage, or the degree of deterioration of the product, based on the possession registration information and the usage history information of the product associated with the multiple users. For example, when a product registered by a first user for possession thereof is retrieved and when the product is then acquired and registered by a second user for possession thereof, the benefit to be granted to the second user when the product is retrieved from the second user may be determined taking into consideration not only the possession registration information and the usage history information of the second user, but also the possession registration information and the usage history information of the first user. This allows a greater benefit to be given to the second user who carefully uses a used product (reused product), thereby encouraging reuse and promoting the collection of reused products.

Based on the collection information associated with the user identification information, the benefit management unit 32 may count the number of times of product retrieval and may generate the benefit information that is more beneficial to the user as the number of times of retrieval is larger. The benefit management unit 32 may also generate the benefit information that is more beneficial to the user when a specific product that is recyclable or easy to recycle has been retrieved or when the number of times a specific product has been retrieved is a predetermined number or larger. This can promote the purchase and collection of specific recyclable products and can thereby promote a virtuous cycle of recycling.

The benefit management unit 32 may generate the benefit information on the condition that a user who has cooperated in the collection of products has purchased a new product. For example, the benefit management unit 32 may generate the benefit information on the condition that: there has been acquired the collection information indicating that a first product has been retrieved from a user; and there has been recorded the possession registration information indicating that a second product different from the first product has been acquired by the same user. The chronological order of the timing of retrieving the first product and the timing of acquiring the second product is not particularly specified; the second product may be acquired after the first product is retrieved, or the first product may be retrieved after the second product is acquired. Also, the benefit information may be generated on the condition that the timing of retrieving the first product and the timing of acquiring the second product are within a predetermined period of time, such as within one month. This can promote the replacement of the first product with the second product and can also promote the retrieval of the used first product.

The benefit management unit 32 may generate multiple pieces of benefit information related to the collection of products. For example, the benefit management unit 32 may generate the benefit information of granting a first benefit to a user on the condition that the first product is retrieved and may also generate the benefit information of granting a second benefit different from the first benefit to the user on the condition that the second product is acquired after the retrieval of the first product. Also, the benefit management unit 32 may generate the benefit information of granting the second benefit to the user on the further condition that the second product is a specific product that is recyclable or easy to recycle. This can promote the replacement of a product with a specific product that is recyclable or easy to recycle and can also promote the retrieval of the used first product.

When the possession period, the number of uses, the total usage, and the degree of deterioration of the product are small, the benefit management unit 32 may generate the benefit information of granting a benefit equivalent to the purchase price of the product to be transferred to another user for the purpose of reuse. For example, when the affinity between the user and a product is low and the user has hardly used the product, granting a benefit to retrieve the product can encourage reuse and can also promote the effective use of the product.

The benefit management unit 32 may generate multiple pieces of benefit information indicating benefits to be granted respectively to multiple users, based on multiple pieces of collection information associated with the multiple users. For example, on the condition that there has been acquired multiple pieces of collection information indicating that a predetermined number or more of products have been collected from multiple users participating in a charity event or the like, a benefit may be granted to all of the multiple users participating in the event. A specific example of the charity event may be an event calling for "the donation of a second product regenerated by collecting 1,000 recyclable first products", in which, on the condition that the number of the first products collected has reached 1,000, a benefit is granted to every user who has cooperated in the collection of the first products. Holding such an event in which users can participate can provide the users with the fun of participating in the event and can also promote the collection of used first products.

On the condition that a product has been retrieved, the benefit management unit 32 may generate the benefit information on a benefit to be granted to the business operator that has retrieved the product. For example, a benefit may be granted to a business operator that operates a store where products are collected. By making it possible to grant a benefit to a business operator, the collection of products at a store can be promoted.

The certification management unit 34 generates certification information that is assigned to a product retrieved from a user when the product is sold as a used product. The certification information is information that indicates the state of a product at the time of retrieval thereof and is certified by a business operator. For example, the certification information includes at least one of the possession registration date, the number of uses, the total usage, or the degree of deterioration of the product. The certification information can be generated based on the possession registration information and the usage history information of the product. When the product is owned by multiple users, the certification information may be generated based on the possession registration information and the usage history information associated with the multiple users. By generating such certification information and assigning it to a product, the quality of the product as a used product can be guaranteed.

The notification unit 36 generates notification information to be conveyed to the user terminal 14. The notification unit 36 generates the notification information for requesting the retrieval of a product from a user, upon satisfaction of a predetermined condition based on the possession registration information and the usage history information. For example, upon satisfaction of a predetermined condition for enabling grant of a benefit for retrieval of a product, the notification unit 36 may generate the notification information for requesting the retrieval of a product from a user. Examples of the predetermined condition for enabling grant of a benefit may be that the possession period of the product is a predetermined value or more (such as 2 years or more), the number of uses of the product is a predetermined value or more (such as 50 times or more), the total usage of the product is a predetermined value or more (e.g., the running distance is 500 km or more), and the degree of deterioration of the product is a predetermined value or more (e.g., the amount of wear of the sole is 5 mm or more). The predetermined condition for enabling grant of a benefit may be weighted based on the user's physical information, such as height and weight. For example, considering that the greater the height or weight, the greater the degree of deterioration of the product, the timing of satisfying the predetermined condition may be made earlier. The notification unit 36 may also generate the notification information regarding a benefit that can be granted to a user after the retrieval of the product. By requesting the retrieval of a product from a user while presenting a benefit that can be granted, the retrieval of a used product can be promoted. Also, the notification unit 36 may generate the notification information regarding a benefit of receiving repair and inspection of a product. Also, the notification unit 36 may generate, for a product that has hardly been used by a user, the notification information indicating that a benefit equivalent to the purchase price of the product can be granted.

The notification unit 36 may generate the notification information for requesting a user to provide the usage history information of a product, upon satisfaction of a predetermined condition based on the possession registration information and the usage history information. For example, the notification information may be generated when the possession period of the product has reached a specific value, or when the number of uses, the total usage, or the degree of deterioration of the product has reached a specific value. The specific value may be set, for example, to a value smaller than the predetermined value at which the benefit for retrieval of the product can be granted. For example, when the possession period is set as a condition, the notification information may be generated when the possession period has reached 1 month, 3 months, 6 months, or 1 year. When the total usage of the product is set as a condition, for example, the notification information may be generated when the running distance has reached 50 km, 100 km, 200 km, or 300 km. Based on the user's physical information, such as height and weight, the specific value as a condition for generating the notification information may be weighted. For example, considering that the greater the height or weight, the greater the degree of deterioration of the product, the notification timing may be made earlier as the height or weight is larger.

The notification unit 36 may also generate the notification information for requesting a user to inspect a product. For example, when a user uses a product frequently and multiple pieces of usage history information have been accumulated, the notification information for requesting input of the current state of the product may be generated, such as "Please tell me the defects or the state of deterioration of the product" or "Please take a picture of the appearance of the product". On the other hand, when a user has not used a product for a certain period of time and the number of pieces of accumulated usage history information is small, the notification information for requesting use of the product may be generated, such as "Would you like to use the product?" or "Why don't you run for the first time in a while?". This may increase the user's attachment to the product, thereby promoting cooperation in the retrieval of the product from the user in the future. Also, details of the deterioration state of a product as a result of use of the product can be collected, which can be useful for product development. In particular, since the used amount and the degree of deterioration in association with the user's physical information can be collected, the usage of the product can be analyzed more precisely.

The notification unit 36 generates the notification information regarding reuse or recycling of a product, upon satisfaction of a predetermined condition based on the posterior state information. For example, the notification unit 36 may generate the notification information upon acquisition or updating of the recycling information or reuse information. Also, according to the progress of recycling, the notification unit 36 may generate the notification information that includes, for example, information indicating the current progress (sorting, crushing, conversion to a material, or regeneration) and information used to play a video of the recycling process on the user terminal 14. Also, according to the progress of reuse, the notification unit 36 may generate the notification information that includes, for example, the current progress (acquisition, use, or retrieval) and attribute information or the usage history information of another user.

The communication unit 38 receives and transmits information via the network 18. The communication unit 38 receives, from the user terminal 14, the user information, possession registration information, usage history information, and the like. Also, the communication unit 38 receives, from the business operator terminal 16, the possession registration information, collection information, posterior state information, and the like. The communication unit 38 transmits the notification information and benefit information to the user terminal 14. The communication unit 38 may transmit the benefit information to the business operator terminal 16.

There will now be described the user terminal 14. The user terminal 14 includes a communication unit 40, a display operation unit 42, a reader 44, a control unit 46, and a storage unit 48.

The communication unit 40 communicates with the information processing device 12 via the network 18. For example, the communication unit 40 transmits, to the information processing device 12, information input to the user terminal 14 and receives, from the information processing device 12, information to be displayed on the user terminal 14.

The display operation unit 42 is constituted, for example, by a touch panel display and enables screen display and input operation for operating the user terminal 14. The display operation unit 42 may be configured to include a display unit and an operation unit separately. The display unit may be constituted by a liquid crystal display, an organic electro-luminescence (EL) display, or the like, and the operation unit may be constituted by a joystick, buttons, and the like.

The reader 44 includes, for example, a two-dimensional image sensor, such as a charge coupled device (CCD) or a complementary metal oxide semiconductor (CMOS), and generates a captured image. For example, the reader 44 generates a product image by capturing an image of the appearance of a product. Also, the reader 44 may generate the product identification information by reading a barcode or a two-dimensional code assigned to a product or a box, for example. The reader 44 may include a wireless communication device for reading a wireless tag assigned to a product or a box, for example, and may generate the product identification information by reading the wireless tag.

The control unit 46 controls the operation of the communication unit 40, the display operation unit 42, and the reader 44. For example, the control unit 46 includes a processor, such as a central processing unit (CPU) or a graphics processing unit (GPU), and operates according to a program stored in the storage unit 48.

The storage unit 48 stores programs and data used for the operation of the control unit 46. The storage unit 48 includes a memory such as a read only memory (ROM) and a random access memory (RAM).

The control unit 46 displays, on the display operation unit 42, an operation screen used by the user to perform the possession registration processing for a product. The user logs in by entering the user identification information through the display operation unit 42. The user acquires the product identification information by reading, with the reader 44, a barcode, a two-dimensional code, or a wireless tag assigned to the product or the box of the product. The user may enter a symbol, a number, or the like indicating the product identification information on the operation screen. The control unit 46 transmits, to the information processing device 12 via the communication unit 40, the possession registration information in which the user identification information and the product identification information are related to each other.

The control unit 46 also displays, on the display operation unit 42, an operation screen used by the user to provide the usage history information of a product. For example, the user selects a product that the user uses, through the display operation unit 42. The user may select a product that the user uses, by reading a barcode, a two-dimensional code, or a wireless tag assigned to the product, for example, using the reader 44. The user may also input, through the operation screen, the date and time of use, the used amount, or the degree of deterioration of the product. The user may also acquire an image showing the appearance of the product by capturing an image of the product using the reader 44. The control unit 46 may also acquire time information from a timing means provided in the user terminal 14 and determine the date and time of use and the wearing time. The control unit 46 may also acquire measurement results from various sensors provided in the user terminal 14 or the product and determine the used amount of the product. For example, the running distance of the user wearing the product may be determined based on the measurement result from a position sensor such as a global navigation satellite system (GNSS), and the number of running steps of the user may be determine based on the measurement result from an acceleration sensor. The control unit 46 may also determine the degree of deterioration of the product based on an appearance image of the product. The control unit 46 transmits, to the information processing device 12 via the communication unit 40, the user identification information, the product identification information, and the usage history information that includes information indicating at least one of the date and time of use, the used amount, the degree of deterioration, or the appearance of the product.

When the control unit 46 receives the notification information from the information processing device 12 via the communication unit 40, the control unit 46 displays the notification information on the display operation unit 42. Based on the notification information transmitted from the information processing device 12, the control unit 46 displays, on the display operation unit 42, a message or pop-up for requesting the retrieval of a product from the user or requesting the user to provide use information. When product retrieval is requested, a guidance screen may be displayed on the display operation unit 42 to indicate the method and procedure of product retrieval, a nearby collection store, and the installation location of a collection device. Also, when product retrieval is requested, a benefit obtained after the retrieval may be displayed on the display operation unit 42. When the control unit 46 has received the benefit information from the information processing device 12 via the communication unit 40, the control unit 46 displays the benefit information on the display operation unit 42.

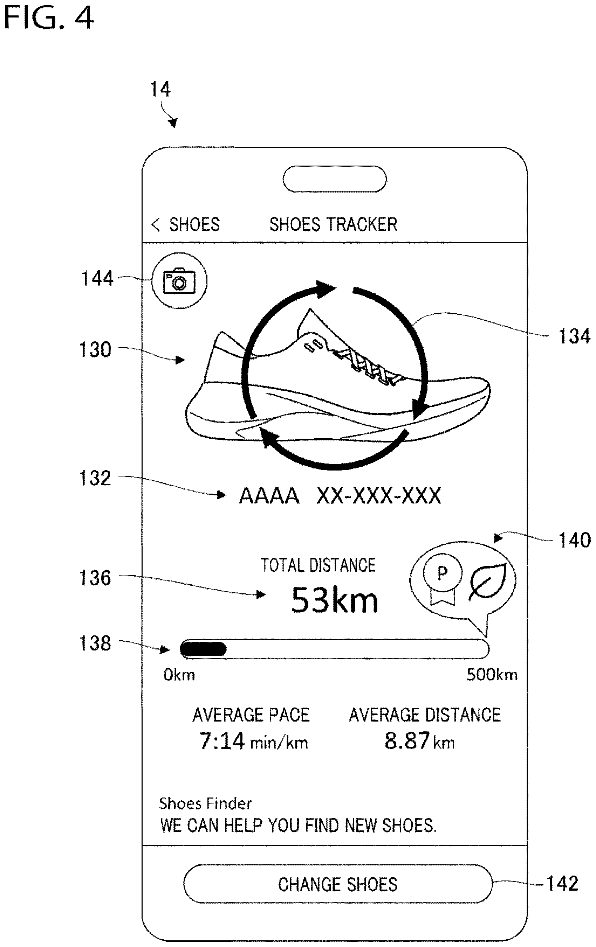

FIG. 4 schematically illustrates an example of a display screen of the user terminal 14. In an upper part of the screen, a product image 130 of a product used by the user and characters 132 indicating the product name and the product identification information are displayed. The product image 130 is provided with rotating arrows 134 that schematically indicate that the product is recyclable. In a center part of the screen, characters 136 of "TOTAL DISTANCE 53 km", indicating the used amount of the product, and a progress bar 138 are displayed. The progress bar 138 indicates the progress of the running distance with respect to 500 km, at which a benefit can be granted. At the right end of the progress bar 138, a benefit image 140 is displayed showing a benefit that can be granted on the condition that the running distance of 500 km is achieved. In a lower part of the screen, a "CHANGE SHOES" button 142 is displayed, which is for shifting to a screen for purchase of a new product or retrieval of a used product. In an upper part of the screen, a camera button 144 is displayed, which is for activating the reader 44 for capturing an image of the appearance of the product.

There will now be described the business operator terminal 16. The business operator terminal 16 includes a communication unit 50, a display operation unit 52, a reader 54, a control unit 56, and a storage unit 58. The business operator terminal 16 may be configured similarly to the user terminal 14, except that a program for a business operator is stored in the storage unit 58 and executed by the control unit 56.

The control unit 56 displays, on the display operation unit 52, an operation screen used to perform collection registration processing for registering a product retrieved from a user. When the business operator terminal 16 is a store terminal, an employee of the store obtains the user identification information by reading, with the reader 54, a barcode or a two-dimensional code displayed on the user terminal 14 of a user visiting the store. The user identification information may be directly entered into the business operator terminal 16 by a user visiting the store. An employee of the store also obtains the product identification information by reading, with the reader 54, a barcode, a two-dimensional code, or a wireless tag assigned to a product or box brought by a user to the store.

When the business operator terminal 16 is a terminal used at a collection site, an employee of the collection site obtains at least one of the user identification information or the product identification information by reading, with the reader 54, a barcode or a two-dimensional code assigned to a delivery slip attached to the box of a product, for example. An employee of the collection site may obtain the product identification information also by reading, with the reader 54, a barcode, a two-dimensional code, or a wireless tag assigned to the product.

The control unit 56 inquires with the information processing device 12 if the combination of the acquired user identification information and product identification information matches the possession registration information stored in the possession registration management unit 24. When the acquired identification information matches the possession registration information, the control unit 56 generates collection information indicating that the product has been retrieved from the user and transmits the collection information to the information processing device 12 via the communication unit 50.

The control unit 56 may receive the benefit information generated on the condition that the product has been retrieved and display the benefit information on the display operation unit 52. The control unit 56 may output the benefit information thus received to a printer or the like and print a coupon or the like on which the benefit is described. For example, when the business operator terminal 16 is a store terminal, a coupon can be given to a user visiting the store for the retrieval of a product. The control unit 56 may display, on the display operation unit 52, a bar code or two-dimensional code with which the benefit information can be read by the user terminal 14 of a user visiting the store.

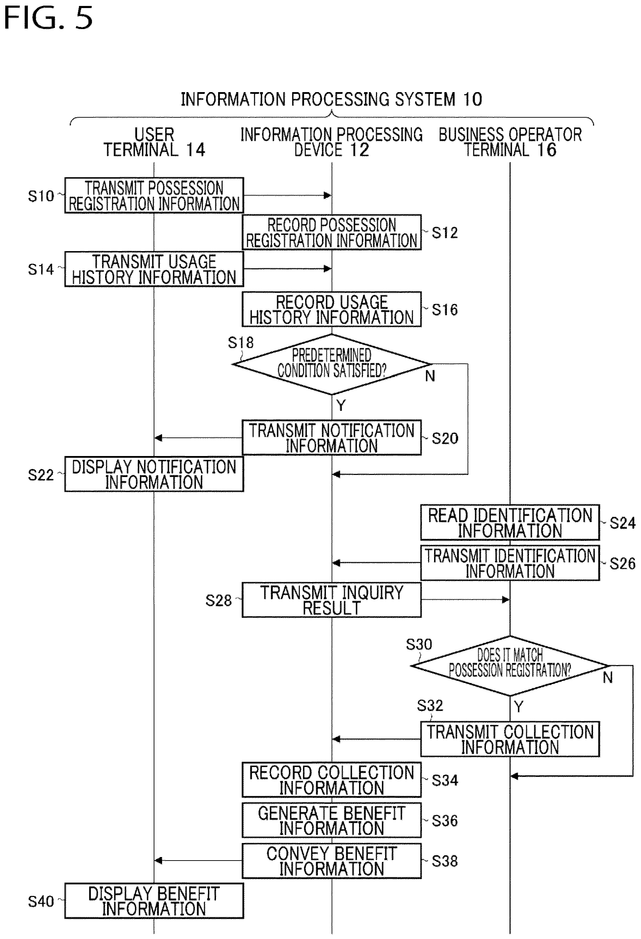

FIG. 5 is a flowchart that shows an example of operation of the information processing system 10. The user terminal 14 acquires user identification information and product identification information and transmits, to the information processing device 12, possession registration information in which the user identification information and the product identification information are related to each other (S10). The information processing device 12 records the possession registration information acquired from the user terminal 14 (S12). The user terminal 14 transmits, to the information processing device 12, usage history information regarding use of the product by the user (S14). The information processing device 12 records the usage history information acquired from the user terminal 14 (S16). When a predetermined condition based on the possession registration information and the usage history information is satisfied (Y at S18), the information processing device 12 generates notification information and transmits it to the user terminal 14 (S20). The user terminal 14 displays the notification information acquired from the information processing device 12 (S22). When a predetermined condition based on the possession registration information and the usage history information is not satisfied (N at S18), the information processing device 12 skips the process of S20. The processes from S14 to S22 are repeatedly performed in response to the use of the product by the user. The notification information generated in S20 may be notification information for requesting the user to provide the usage history information or may be notification information for requesting the retrieval of the product from the user.

When a business operator retrieves a product from the user, the business operator terminal 16 reads the user identification information and the product identification information (S24). The business operator terminal 16 transmits the combination of the acquired user identification information and product identification information to the information processing device 12 (S26). The information processing device 12 transmits, to the business operator terminal 16, the result of inquiry as to whether or not the combination of the user identification information and product identification information matches the possession registration information (S28). When the combination matches the possession registration (Y at S30), the business operator terminal 16 executes collection registration processing and transmits, to the information processing device 12, collection information indicating that the product has been retrieved from the user (S32). When the combination does not match the possession registration (N at S30), the process of S32 is skipped. The information processing device 12 records the collection information acquired from the business operator terminal 16 (S34) and generates benefit information (S36). The information processing device 12 notifies the user terminal 14 of the benefit information (S38). The user terminal 14 displays thereon the benefit information acquired from the information processing device 12 (S40).

In the embodiment described above, the possession registration information, the usage history information, and the benefit information may be generated using a blockchain technology. For example, a condition for granting a benefit may be implemented as a smart contract, and, when a predetermined condition regarding the possession registration information, the usage history information, and the collection information specified in the smart contract is satisfied, the benefit may be granted to the user or business operator. In this case, the benefit to be granted may be a crypto asset. Also, as the product identification information, a non-fungible token (NFT) may be used.

The embodiment described above may be a program for causing a computer to perform functions to realize the method described above or may be a storage medium storing the program. The storage medium storing such a program may be a non-transitory and tangible computer readable storage medium and may be a non-volatile memory, a magnetic storage medium such as a magnetic tape or a magnetic disk, or an optical storage medium such as an optical disk.

The present disclosure has been described based on an embodiment. The embodiment is intended to be illustrative only, and it will be obvious to those skilled in the art that various modifications to a combination of constituting elements or processes could be developed and that such modifications also fall within the scope of the present disclosure. Also, when the embodiment set forth above is generalized, the following aspects are obtained.

### Aspect 1

An information processing system, including:
a possession registration management unit that records possession registration information in which user identification information for identifying a user and product identification information for identifying a product obtained by the user are related to each other;
a usage history management unit that records usage history information regarding use of the product, acquired from a terminal used by the user;
a collection management unit that acquires collection information indicating that the product has been retrieved from the user; and
a benefit management unit that generates benefit information indicating a benefit to be granted to the user, based on possession registration information and usage history information of the product on the condition that the collection information has been acquired.

### Aspect 2

The information processing system according to Aspect 1, further including a notification unit that generates notification information for requesting, via a terminal used by the user, the retrieval of the product from the user, upon satisfaction of a predetermined condition based on possession registration information and usage history information of the product.

### Aspect 3

The information processing system according to Aspect 1 or 2, further including a notification unit that generates notification information for requesting the user, via a terminal used by the user, to provide usage history information of the product, upon satisfaction of a predetermined condition based on possession registration information and usage history information of the product.

### Aspect 4

The information processing system according to any one of Aspects 1 through 3, further including:
a posterior state management unit that acquires posterior state information regarding a state of the product after the product is retrieved from the user; and
a notification unit that generates notification information for a terminal used by the user, regarding reuse or recycling of the product, upon satisfaction of a predetermined condition based on posterior state information of the product.

### Aspect 5

The information processing system according to according to any one of Aspects 1 through 4, wherein the product is worn by the user.

### Aspect 6

The information processing system according to any one of Aspects 1 through 5,
wherein the usage history information includes information indicating at least one of date and time of use, a used amount, a degree of deterioration, or appearance of the product, and
wherein the benefit management unit generates the benefit information based on at least one of a possession period, the number of uses, the total usage, or a degree of deterioration of the product calculated based on possession registration information and usage history information of the product.

### Aspect 7

The information processing system according to any one of Aspects 1 through 6, wherein the benefit management unit generates the benefit information on the condition that: there has been acquired collection information indicating that a first product, as the product, has been retrieved from the user; and there has been recorded possession registration information indicating that a second product different from the first product has been acquired by the user.

### Aspect 8

The information processing system according to any one of Aspects 1 through 6,
wherein the benefit management unit generates benefit information of granting a first benefit, as the benefit, to the user on the condition that there has been acquired collection information indicating that a first product, as the product, has been retrieved from the user, and
wherein the benefit management unit generates benefit information of granting a second benefit different from the first benefit to the user on the condition that: there has been acquired collection information indicating that the first product has been retrieved from the user; and there has been recorded possession registration information indicating that a second product different from the first product has been acquired by the user.

### Aspect 9

The information processing system according to any one of Aspects 1 through 8, wherein the benefit management unit generates, on the condition that there have been acquired a plurality of pieces of collection information indicating that a predetermined number or more of products have been collected from a plurality of users, a plurality of pieces of benefit information indicating benefits to be granted respectively to the plurality of users.

### Aspect 10

An information processing method performed by an information processing system, the information processing method including:
recording possession registration information in which user identification information for identifying a user and product identification information for identifying a product obtained by the user are related to each other;
recording usage history information regarding use of the product, acquired from a terminal used by the user;
acquiring collection information indicating that the product has been retrieved from the user; and
generating benefit information indicating a benefit to be granted to the user, based on possession registration information and usage history information of the product on the condition that the collection information has been acquired.

### Aspect 11

A program causing a computer to implement the method according to Aspect 10.

### Aspect 12

A non-transitory storage medium storing the program according to Aspect 11.

## Claims

1. An information processing system (10), comprising:
a possession registration management unit (24) that records possession registration information in which user identification information for identifying a user (110) and product identification information for identifying a product (100) obtained by the user (110) are related to each other;
a usage history management unit (26) that records usage history information regarding use of the product (100), acquired from a terminal (14, 112) used by the user (110);
a collection management unit (28) that acquires collection information indicating that the product (102) has been retrieved from the user (110); and
a benefit management unit (32) that generates benefit information indicating a benefit (120, 122) to be granted to the user (110), based on possession registration information and usage history information of the product on the condition that the collection information has been acquired.

2. The information processing system (10) according to claim 1, further comprising a notification unit (36) that generates notification information for requesting, via a terminal (14, 112) used by the user (110), the retrieval of the product (102) from the user (110), upon satisfaction of a predetermined condition based on possession registration information and usage history information of the product.

3. The information processing system (10) according to claim 1, further comprising a notification unit (36) that generates notification information for requesting the user (110), via a terminal (14, 112) used by the user (110), to provide usage history information of the product, upon satisfaction of a predetermined condition based on possession registration information and usage history information of the product.

4. The information processing system (10) according to claim 1, further comprising:
a posterior state management unit (30) that acquires posterior state information regarding a state of the product (102) after the product is retrieved from the user (110); and
a notification unit (36) that generates notification information for a terminal (14, 112) used by the user (110), regarding reuse or recycling of the product (102), upon satisfaction of a predetermined condition based on posterior state information of the product.

5. The information processing system (10) according to claim 1, wherein the product (100) is worn by the user (110).

6. The information processing system (10) according to any one of claims 1 through 5,
wherein the usage history information includes information indicating at least one of date and time of use, a used amount, a degree of deterioration, or appearance of the product, and
wherein the benefit management unit (32) generates the benefit information based on at least one of a possession period, the number of uses, the total usage, or a degree of deterioration of the product calculated based on possession registration information and usage history information of the product.

7. The information processing system (10) according to any one of claims 1 through 5, wherein the benefit management unit (32) generates the benefit information on the condition that: there has been acquired collection information indicating that a first product (102), as the product, has been retrieved from the user (110); and there has been recorded possession registration information indicating that a second product (100) different from the first product has been acquired by the user (110).

8. The information processing system (10) according to any one of claims 1 through 5,
wherein the benefit management unit (32) generates benefit information of granting a first benefit (120), as the benefit, to the user (110) on the condition that there has been acquired collection information indicating that a first product (102), as the product, has been retrieved from the user (110), and
wherein the benefit management unit (32) generates benefit information of granting a second benefit (122) different from the first benefit (120) to the user (110) on the condition that: there has been acquired collection information indicating that the first product (102) has been retrieved from the user (110); and there has been recorded possession registration information indicating that a second product (100) different from the first product (102) has been acquired by the user.

9. The information processing system (10) according to any one of claims 1 through 5, wherein the benefit management unit (32) generates, on the condition that there have been acquired a plurality of pieces of collection information indicating that a predetermined number or more of products have been collected from a plurality of users, a plurality of pieces of benefit information indicating benefits to be granted respectively to the plurality of users.

10. An information processing method performed by an information processing system (10), the information processing method comprising:
recording (S12) possession registration information in which user identification information for identifying a user (110) and product identification information for identifying a product (100) obtained by the user (110) are related to each other;
recording (S16) usage history information regarding use of the product (100), acquired from a terminal (14, 112) used by the user (110);
acquiring (S34) collection information indicating that the product (100, 102) has been retrieved from the user (110); and
generating (S36) benefit information indicating a benefit (120, 122) to be granted to the user (110), based on possession registration information and usage history information of the product (100) on the condition that the collection information has been acquired.
